# FASCICULE DE BREVET EUROPEEN

(11) **EP 3 083 281 B1**
(45) Date de publication et mention de la délivrance du brevet: **07.08.2019**
(21) Numéro de dépôt: 14814870.3
(22) Date de dépôt: 18.12.2014
(51) Int. Cl.: B60C 11/00, B60C 11/11

(54) **BANDE DE ROULEMENT DE PNEUMATIQUE POUR VEHICULE A USAGE AGRICOLE**
REIFENLAUFFLÄCHE FÜR EIN LANDWIRTSCHAFTLICHES FAHRZEUG
TYRE TREAD FOR A FARM VEHICLE

(30) Priorité: 20.12.2013 FR 1363134
(43) Date de publication de la demande: 26.10.2016
(73) Titulaire: Compagnie Générale des Etablissements Michelin, 63000 Clermont-Ferrand (FR)
(72) Inventeur: VERVAET, Patrick, F-63040 Clermont-Ferrand Cedex 9 (FR); REY, Daniel, F-63040 Clermont-Ferrand Cedex 9 (FR); LALANCE, Gautier, F-63040 Clermont-Ferrand Cedex 9 (FR); MANGERET, Jean-Luc, F-63040 Clermont-Ferrand Cedex 9 (FR)
(74) Mandataire: Millanvois, Patrick Jacques Jean
(86) Numéro de dépôt international: PCT/EP2014/078366
(87) Numéro de publication internationale: WO 2015/091731

(56) Documents cités:
- EP-A1- 0 538 723
- EP-A1- 1 897 703
- EP-A2- 1 398 182
- FR-A1- 2 952 855

## Description

La présente invention concerne un pneumatique pour véhicule à usage agricole, tel qu'un tracteur agricole ou un véhicule agro-industriel.

Elle concerne plus particulièrement la bande de roulement d'un tel pneumatique, destinée à entrer à contact avec un sol par l'intermédiaire d'une surface de roulement.

Dans ce qui suit, les directions circonférentielle, axiale et radiale désignent respectivement une direction tangente à la surface de roulement du pneumatique et orientée selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique pour tracteur agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneumatique pour tracteur agricole, et en particulier sa bande de roulement, doit présenter un compromis de performances entre la traction en champ, la résistance aux arrachements, la résistance à l'usure sur route, la résistance au roulement, le confort vibratoire sur route.

La bande de roulement d'un pneumatique pour tracteur agricole comprend généralement une pluralité de barrettes. Les barrettes sont des éléments en relief par rapport à une surface de fond qui est une surface de révolution autour de l'axe de rotation du pneumatique.

Une barrette a généralement une forme globalement parallélépipédique allongée, constituée d'au moins une portion rectiligne ou curviligne, et est séparée des barrettes adjacentes par des sillons. Une barrette peut être constituée d'une succession de portions rectilignes, telle que décrite dans les documents US3603370, US4383567, EP795427 ou avoir une forme curviligne, telle que présentée dans les documents US4446902, EP903249, EP1831034.

Selon la direction radiale, une barrette s'étend à partir de la surface de fond jusqu'à la surface de roulement, la distance radiale entre la surface de fond et la surface de roulement définissant la hauteur de barrette. La face radialement extérieure de la barrette, appartenant à la surface de roulement, qui entre en contact avec le sol, lors du passage de la barrette dans l'aire de contact du pneumatique, est appelée face de contact de la barrette.

Selon la direction axiale, une barrette s'étend vers l'intérieur, en direction du plan équatorial du pneumatique, à partir d'une face d'extrémité axialement extérieure jusqu'à une face d'extrémité axialement intérieure.

Selon la direction circonférentielle, une barrette s'étend, selon un sens de rotation préférentiel du pneumatique, à partir d'une face d'attaque jusqu'à une face de fuite. Par sens de rotation préférentiel, on entend le sens de rotation préconisé par le fabricant du pneumatique pour une utilisation optimale du pneumatique. A titre d'exemple, dans le cas d'une bande de roulement comprenant deux rangées de barrettes en V ou en chevrons, le pneumatique a un sens de rotation préférentiel selon la pointe des chevrons. La face d'attaque est, par définition, la face dont l'arête radialement extérieure ou arête d'attaque entre en premier en contact avec le sol, lors du passage de la barrette dans la surface de contact du pneumatique avec le sol, au cours de la rotation du pneumatique. La face de fuite est, par définition, la face dont l'arête radialement extérieure ou arête de fuite entre en dernier en contact avec le sol, lors du passage de la barrette dans la surface de contact du pneumatique avec le sol, au cours de la rotation du pneumatique. Selon le sens de rotation, la face d'attaque est dite en avant par rapport à la face de fuite.

Une barrette a usuellement, mais pas obligatoirement, un angle d'inclinaison moyen, par rapport à la direction circonférentielle, proche de 45°. En effet, cet angle d'inclinaison moyen permet en particulier un bon compromis entre la traction en champ et le confort vibratoire. La traction en champ est d'autant meilleure que la barrette est axiale, c'est-à-dire que son angle d'inclinaison moyen, par rapport à la direction circonférentielle est proche de 90°, alors que le confort vibratoire est d'autant meilleur que la barrette est circonférentielle, c'est-à-dire que son angle d'inclinaison moyen, par rapport à la direction circonférentielle, est proche de 0°. Il est notoire que la traction en champ est plus fortement déterminée par l'angle de la barrette au niveau de l'épaule, ce qui a amené certains concepteurs de pneumatiques à proposer une forme de barrette très incurvée, conduisant à une barrette sensiblement axiale à l'épaule et sensiblement circonférentielle au milieu de la bande de roulement.

La bande de roulement d'un pneumatique pour tracteur agricole comprend généralement deux rangées de barrettes telles que précédemment décrites. Cette distribution de barrettes inclinées par rapport à la direction circonférentielle confère à la bande de roulement une forme en V couramment dénommée motif en chevrons. Les deux rangées de barrettes présentent une symétrie par rapport au plan équatorial du pneumatique, avec le plus souvent un décalage circonférentiel entre les deux rangées de barrettes, résultant d'une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

La bande de roulement d'un pneumatique pour tracteur agricole comprend ainsi deux types d'éléments : les barrettes, qui sont les éléments en reliefs, et les sillons, qui sont les portions de la surface de fond séparant les barrettes. Ces deux types d'éléments sont sollicités de façon très différente. Les barrettes sont plus particulièrement sensibles à l'usure en usage routier et aux agressions par les cailloux en usage non routier ou en champ. Les sillons, entre les barrettes, sont principalement agressés par les chaumes résiduels après récolte, en usage en champ, et sont également sensibles aux agressions chimiques par l'ozone dans la mesure où ces sillons ne sont pas soumis à l'usure.

Les inventeurs se sont donnés pour objectif de concevoir une bande de roulement pour véhicule à usage agricole, plus performante à la fois du point de vue de la résistance à l'usure en usage routier et du point de vue de la résistance aux agressions par les chaumes résiduels ou « stubble » en usage en champ.

Ce but a été atteint selon l'invention par un pneumatique pour véhicule à usage agricole comprenant:
- une bande de roulement, destinée à entrer en contact avec un sol, comprenant des barrettes séparées les unes des autres par des sillons,
- chaque barrette s'étendant radialement vers l'extérieur, sur une hauteur radiale H, à partir d'une surface de fond jusqu'à une face de contact,
- les sillons étant constitués par les portions de la surface de fond séparant les barrettes,
- dans chaque barrette, une première portion de barrette, constituée par un premier mélange élastomérique, s'étendant radialement vers l'intérieur, à partir de la face de contact jusqu'à une première interface, sur une distance radiale D₁ au moins égale 0.5 fois et au plus égale à 1 fois la hauteur radiale H de barrette,
- dans chaque barrette, une deuxième portion de barrette, constituée par un deuxième mélange élastomérique, s'étendant radialement vers l'intérieur, à partir de la première interface jusqu'à la surface de fond, sur une distance radiale D₂,
- le deuxième mélange élastomérique s'étendant radialement à l'intérieur des barrettes et des sillons, à partir de la surface de fond jusqu'à une deuxième interface, sur une distance radiale D₃,
- et la distance radiale D₃ entre la surface de fond et la deuxième interface est au moins égale à 3 mm et au plus égale à 15 mm.

L'invention vise à obtenir une différenciation des performances de la bande de roulement entre les barrettes, destinées, en particulier, à résister à l'usure en usage routier, et les sillons inter-barrettes, voire les pieds de barrettes, destinés, en particulier, à résister aux agressions en usage en champ, par exemple à des agressions par des chaumes résiduels après récolte ou « stubble ». Les barrettes étant les éléments de la bande roulement soumis à l'usure sont constituées majoritairement, sur une première portion, d'un premier mélange élastomérique résistant à l'usure, alors que les portions de barrettes, positionnées en pied de barrettes, à proximité de la surface de fond, et les sillons inter-barrettes, portions de la surface de fond entre les barrettes, c'est-à-dire, les éléments non soumis à l'usure, sont constitués par un deuxième mélange élastomérique résistant aux agressions.

Selon l'invention, pour une barrette donnée, une première portion de barrette s'étend à partir de la face de contact, destinée à entrer en contact avec le sol en roulage, jusqu'à une première interface, correspondant à la limite radialement intérieure de la première portion de barrette. La première interface est radialement extérieure à la surface de fond ou est située au niveau de la surface de fond. Une première interface radialement extérieure à la surface de fond correspond à une distance radiale entre la face de contact et la première interface inférieure à la hauteur radiale H de la barrette, c'est-à-dire à une première portion de barrette représentant moins de 100% de la barrette. Une première interface située au niveau de la surface de fond correspond à une distance radiale entre la face de contact et la première interface égale à la hauteur radiale H de la barrette, c'est-à-dire à une première portion de barrette représentant 100% de la barrette.

Dans le cas où la première portion de barrette représente moins de 100% de la barrette, une deuxième portion de barrette, constituée par un deuxième mélange élastomérique, s'étend radialement vers l'intérieur, à partir de la première interface, correspondant à l'interface entre les premier et deuxième mélanges élastomériques, jusqu'à la surface de fond. Cette deuxième portion constitue le pied de la barrette.

De plus, le deuxième mélange élastomérique, constitutif de la deuxième portion de barrette, se prolonge radialement à l'intérieur de la surface de fond, à la fois radialement à l'intérieur des barrettes et radialement à l'intérieur des sillons, jusqu'à une deuxième interface. Cette portion de pneumatique comprise entre la surface de fond et la deuxième interface, correspondant à la limite radialement intérieure du deuxième mélange élastomérique, est usuellement appelée sous-creux. Son rôle est de protéger l'armature de sommet du pneumatique radialement intérieure à la bande de roulement vis-à-vis des agressions mécaniques et physico-chimiques. La distance radiale entre la surface de fond et la deuxième interface définit l'épaisseur du sous-creux, qui est une caractéristique importante vis-à-vis de la protection de l'armature de sommet du pneumatique.

Enfin, la distance radiale D₃ entre la surface de fond et la deuxième interface est au moins égale à 3 mm et au plus égale à 15 mm. En d'autres termes, l'épaisseur du sous-creux est comprise entre une limite inférieure égale à 3 mm et une limite supérieure égale à 15 mm. La limite inférieure correspond à une épaisseur minimale en-deçà de laquelle le sous-creux n'assure plus correctement sa fonction de protection vis-à-vis de l'armature de sommet. La limite supérieure correspond à une épaisseur maximale au-delà de laquelle le niveau thermique dans le sommet devient trop important. Cet intervalle garantit un compromis entre la tenue du sommet du pneumatique aux agressions et son endurance vis-à-vis du niveau thermique.

Avantageusement, le premier mélange élastomérique ayant un module complexe de cisaillement dynamique G₁* à 50% de déformation et à 60°C, le module complexe de cisaillement dynamique G₁* du premier mélange élastomérique est au moins égal à 1.2 MPa et, de préférence au plus égal à 2 MPA. Un module complexe de cisaillement dynamique G₁^{*} à 50% de déformation et à 60°C, compris dans un tel intervalle de valeurs, confère au premier mélange élastomérique des propriétés de cohésion favorables pour résister aux agressions de type usure routière et par des cailloux.

Encore avantageusement, le premier mélange élastomérique ayant un facteur de perte tan (δ₁) à 60°C, le facteur de perte tan (δ₁) du premier mélange élastomérique est au moins égal à 0.18 et au plus égal à 0.32. Un facteur de perte tan (δ₁), compris dans un tel intervalle de valeurs, permet de limiter la dissipation d'énergie.

De façon générale, le module complexe G* et le facteur de perte tan(δ) d'un mélange élastomérique sont des propriétés dites dynamiques. Ils sont mesurés sur un visco-analyseur, de type Metravib VA4000, selon la norme ASTM D 5992-96. On enregistre la réponse d'un échantillon du mélange élastomérique vulcanisé, sous la forme d'une éprouvette cylindrique de 4 mm d'épaisseur et de 400 mm² de section, soumis à une sollicitation sinusoïdale en cisaillement simple alterné, à la fréquence de 10Hz, à une température donnée, par exemple de 60°C. On effectue un balayage en amplitude de déformation de 0,1% à 50%, selon un cycle aller, puis de 50% à 1%, selon un cycle retour. Les résultats exploités sont le module complexe de cisaillement dynamique G* et le facteur de perte tan (δ). Pour le cycle retour, on indique la valeur maximale de tan(δ) observée, noté tan (δ)ₘₐₓ.

Du point de vue de la composition chimique, le premier mélange élastomérique, constitutif de la première portion de barrette, comprend des élastomères diéniques, des charges renforçantes et un système de réticulation. Les élastomères diéniques classiquement utilisés sont choisis dans le groupe constitué par les polybutadiènes (BR), le caoutchouc naturel (NR), les polyisoprènes de synthèse (PI) et les copolymères styrène-butadiène (SBR). Préférentiellement, les élastomères sont utilisés sous forme de coupages NR/BR ou SBR/BR, voire de coupages NR/BR/SBR. Préférentiellement les SBR utilisés présentent des températures de transition vitreuse ou Tg dynamiques inférieures à -50°C, mesurées sur un visco-analyseur de type Metravib VA4000, selon la norme ASTM D 5992-96. En ce qui concerne la charge renforçante, le premier mélange élastomérique comprend au moins un noir de carbone, tel qu'un noir de carbone des séries 200 et 100 (grades ASTM), ce noir ayant une surface spécifique BET supérieure à 100 m²/g et étant employé à un taux compris entre 50 et 75 pce.

Le premier mélange élastomérique, comprenant les élastomères ou coupages d'élastomère ainsi que les noirs de carbone cités précédemment, présente des propriétés satisfaisantes en termes de résistance aux agressions de type usure routière et d'agressions par des cailloux.

Avantageusement, le deuxième mélange élastomérique ayant un module complexe de cisaillement dynamique G₂* à 50% de déformation et à 60°C, le module complexe de cisaillement dynamique G₂* du deuxième mélange élastomérique est au moins égal à 1 MPa-et, de préférence, au plus égal à 1.7 MPA. Un module complexe de cisaillement dynamique G₂^{*} à 50% de déformation et à 60°C du deuxième mélange élastomérique, compris dans un intervalle de valeurs, confère au deuxième mélange élastomérique des niveaux de rigidités favorables pour limiter les contraintes mécaniques et favorables pour limiter les agressions par les débris de chaumes (Stubble).

Encore avantageusement, le deuxième mélange élastomérique ayant un facteur de perte tan (δ₂) à 60°C, le facteur de perte tan (δ₂) du deuxième mélange élastomérique est au moins égal à 0.15 et au plus égal à 0.28. Un facteur de perte tan (δ₂), compris dans un tel intervalle de valeurs, permet de limiter la dissipation d'énergie dans la portion de pneumatique comprise entre la surface de fond et la deuxième interface, appelée sous creux.

Du point de vue de la composition chimique, le deuxième mélange élastomérique, constitutif du sous-creux, comprend des élastomères diéniques, des charges renforçantes et un système de réticulation. Les élastomères diéniques classiquement utilisés sont choisis préférentiellement dans le groupe constitué le caoutchouc naturel (NR), les polyisoprènes de synthèse (PI) et les copolymères styrène-butadiène (SBR). Préférentiellement, les élastomères sont utilisés sous forme de coupages NR/BR ou SBR/BR. Préférentiellement les SBR utilisés seuls ou en coupage présentent des températures de transition vitreuse ou Tg dynamiques comprises entre - 65°C et -40°C, mesurées sur un visco-analyseur de type Metravib VA4000, selon la norme ASTM D 5992-96. En ce qui concerne la charge renforçante, le deuxième mélange élastomérique comprend au moins un noir de carbone, tel qu'un noir de carbone de la série 300 (grades ASTM) voire un noir de carbone de série plus élevée, ce noir ayant une surface spécifique BET inférieure à 100 m²/g et étant employé à un taux compris entre 40 et 70 pce. Les compositions du deuxième mélange élastomérique du sous-creux de la bande de roulement peuvent comporter également tout ou partie des additifs usuels habituellement utilisés dans les compositions d'élastomères destinées à la fabrication de pneumatiques, en particulier de couches d'étanchéité, comme par exemple des agents de protection tels que des cires anti-ozone, des anti-ozonants chimiques, des anti-oxydants, des agents anti-fatigue. Par exemple, ces compositions comportent des agents de protection tels que de la cire paraffine à un taux compris entre 2 et 5 pce, préférentiellement de 2 à 3 pce et de la N-1,3-diméthylbutyl-N-phénylparaphenylènediamine (6-PPD) à un taux compris entre 3 et 5 pce, préférentiellement de 3 à 4 pce.

Le deuxième mélange élastomérique, comprenant les élastomères ou coupages d'élastomères, les noirs de carbone et les agents anti-oxydants et anti-ozonants cités précédemment, présente des propriétés satisfaisantes en termes de résistance aux agressions par les débris de chaumes ou « stubble » et aux agressions chimiques de type ozone.

En ce qui concerne la faisabilité industrielle, un pneumatique selon l'invention, et plus précisément de la bande de roulement d'un tel pneumatique, peut être fabriqué selon un procédé tel que décrit et revendiqué par le document WO 2009131578. L'invention, décrite et revendiquée par le document WO 2009131578, se rapporte à des procédés et à un appareil de formation d'un composant de pneumatique multicouche, les étapes du procédé consistant à :
- utiliser un système mécanique, le système comprenant une pluralité d'éléments de coupe ;
- déplacer une feuille de matériau le long d'un chemin de déplacement à travers le système mécanique;
- couper une première bande de la feuille au moyen d'un ou de plusieurs éléments de la pluralité d'éléments de coupe, cette étape se produisant au cours de l'étape de déplacement;
- appliquer mécaniquement la première bande à une surface de construction, cette étape se produisant au cours de l'étape de déplacement;
- couper une seconde bande de la feuille après l'étape de coupe de la première bande, cette étape se produisant au cours de l'étape de déplacement;
- appliquer mécaniquement la seconde bande à une surface de construction, cette étape se produisant au cours de l'étape de déplacement.

Des modes de réalisation spécifiques du procédé précédemment décrit, relatif à une fabrication multicouche de la bande de roulement, ont été également décrits par les documents WO 2013176675 et WO 2013176676.

La présente invention sera mieux comprise à l'aide des figures 1 à 3, schématiques et non représentées à l'échelle, jointes en annexe :
- figure 1 : vue en perspective d'un pneumatique pour véhicule à usage agricole,
- figure 2 : vue, selon une direction radiale (Z), de la bande de roulement d'un pneumatique pour véhicule à usage agricole,
- figure 3: vue en coupe, selon un plan méridien (XY), d'une portion de bande de roulement d'un pneumatique selon l'invention.

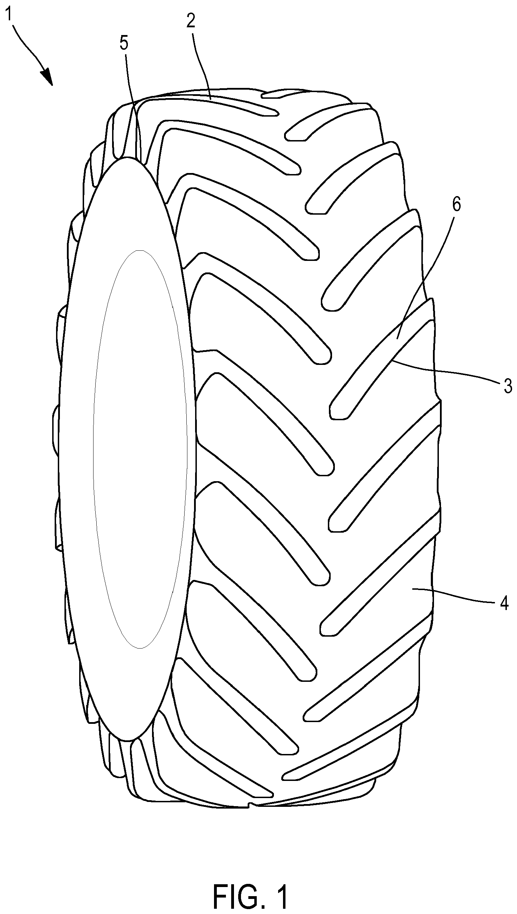

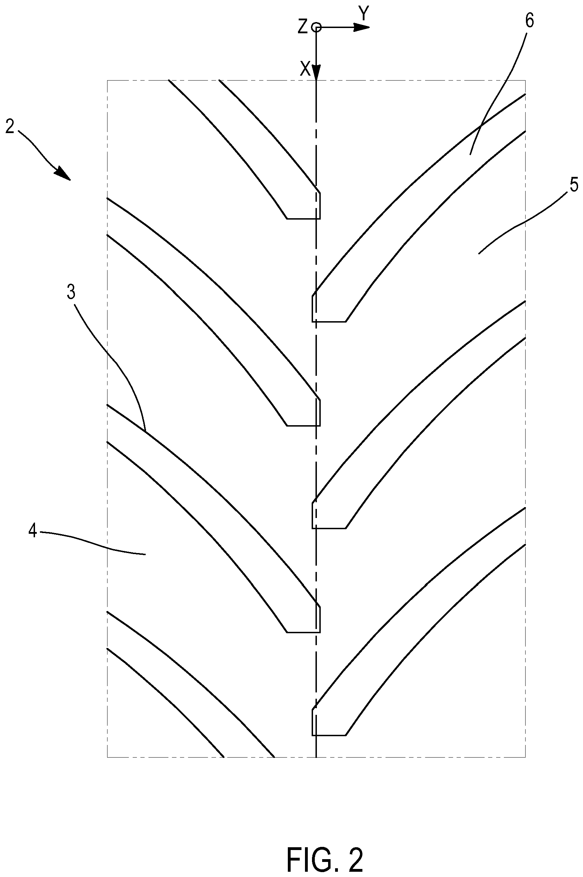

Les figures 1 et 2 présentent respectivement une vue en perspective d'un pneumatique 1 pour véhicule à usage agricole, et une vue, selon une direction radiale Z, de la bande de roulement d'un tel pneumatique. La bande de roulement 2, destinée à entrer en contact avec un sol par l'intermédiaire d'une surface de roulement, comprend des barrettes 3 séparées les unes des autres par des sillons 4. Chaque barrette 3 s'étend radialement vers l'extérieur, à partir d'une surface de fond 5 jusqu'à une face de contact 6, positionnée dans la surface de roulement. Les sillons 4 sont constitués par les portions de la surface de fond 5 séparant les barrettes 3.

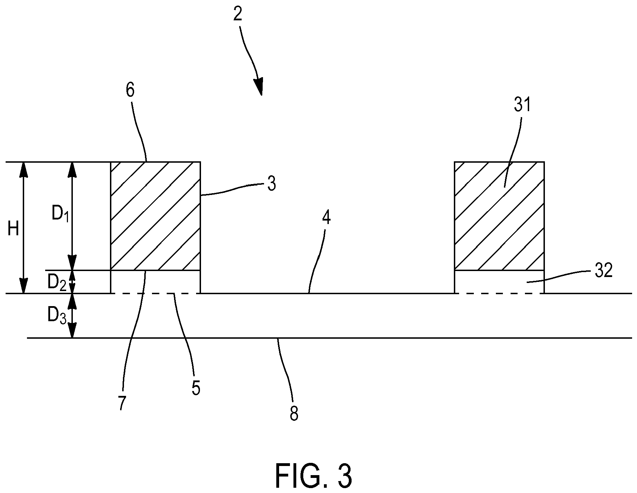

La figure 3 présente une vue en coupe, selon un plan méridien (XY), d'une portion de bande de roulement 2 d'un pneumatique selon l'invention. Dans chaque barrette 3, une première portion de barrette 31, constituée par un premier mélange élastomérique, s'étend radialement vers l'intérieur, à partir de la face de contact 6 jusqu'à une première interface 7, sur une distance radiale D₁ au moins égale 0.5 fois et au plus égale à 1 fois la hauteur radiale H de barrette. Egalement dans chaque barrette 3, une deuxième portion de barrette 32, constituée par un deuxième mélange élastomérique, s'étend radialement vers l'intérieur, à partir de la première interface 7 jusqu'à la surface de fond 5, sur une distance radiale D₂. De plus, le deuxième mélange élastomérique s'étend radialement à l'intérieur des barrettes 3 et des sillons 4, à partir de la surface de fond 5 jusqu'à une deuxième interface 8, sur une distance radiale D₃. La portion de pneumatique comprise entre la surface de fond 5 et la deuxième interface 8 constitue le sous-creux

L'invention a été plus particulièrement étudiée pour un pneumatique agricole, dans lequel le premier mélange élastomérique a un module complexe de cisaillement dynamique G₁* égal à 1.72 MPa et un facteur de perte tan (δ₁) égal à 0.29, et le deuxième mélange élastomérique a un module complexe de cisaillement dynamique G₂* égal à 1.31 MPa et un facteur de perte tan (δ₂) égal à 0.22.

Les premier et deuxième mélanges élastomériques peuvent avoir des compositions chimiques différentes de celles précédemment décrites, selon les performances recherchées.

L'invention peut être étendue à une bande de roulement comprenant des barrettes constituées d'un premier et d'un deuxième mélanges élastomériques, le deuxième mélange élastomérique étant limité par la surface de fond. La portion de pneumatique radialement intérieure à la surface de fond peut être constituée par au moins un troisième mélange élastomérique de composition chimique distincte de celles des premier et deuxième mélanges élastomériques.

L'invention est applicable à tout pneumatique dont la bande de roulement comprend des éléments en relief et susceptible de rouler sur des sols comprenant des indenteurs agressifs, tel qu'un pneumatique pour véhicule de génie civil.

## Revendications

1. Pneumatique (1) pour véhicule à usage agricole comprenant:
- une bande de roulement (2), destinée à entrer en contact avec un sol, comprenant des barrettes (3) séparées les unes des autres par des sillons (4),
- chaque barrette (3) s'étendant radialement vers l'extérieur, sur une hauteur radiale H, à partir d'une surface de fond (5) jusqu'à une face de contact (6),
- les sillons (4) étant constitués par les portions de la surface de fond (5) séparant les barrettes (3),
**caractérisé en ce que,** dans chaque barrette (3), une première portion de barrette (31), constituée par un premier mélange élastomérique, s'étend radialement vers l'intérieur, à partir de la face de contact (6) jusqu'à une première interface (7), sur une distance radiale D₁ au moins égale 0.5 fois et au plus égale à 1 fois la hauteur radiale H de barrette, **en ce que**, dans chaque barrette (3), une deuxième portion de barrette (32), constituée par un deuxième mélange élastomérique, s'étend radialement vers l'intérieur, à partir de la première interface (7) jusqu'à la surface de fond (5), sur une distance radiale D₂, **en ce que** le deuxième mélange élastomérique s'étend radialement à l'intérieur des barrettes (3) et des sillons (4), à partir de la surface de fond (5) jusqu'à une deuxième interface (8), sur une distance radiale D₃ **et en ce que** la distance radiale D₃ entre la surface de fond (5) et la deuxième interface (8) est au moins égale à 3 mm et au plus égale à 15 mm.

2. Pneumatique (1) selon la revendication 1, le premier mélange élastomérique ayant un module complexe de cisaillement dynamique G₁* à 50% de déformation et à 60°C, **dans lequel** le module complexe de cisaillement dynamique G₁* du premier mélange élastomérique est au moins égal à 1.2 MPa et, de préférence, au plus égal à 2 MPA.

3. Pneumatique (1) selon l'une des revendications 1 ou 2, le premier mélange élastomérique ayant un facteur de perte tan (δ₁) à 60°C, **dans lequel** le facteur de perte tan (δ₁) du premier mélange élastomérique est au moins égal à 0.18 et au plus égal à 0.32.

4. Pneumatique (1) selon l'une quelconque des revendications 1 à 3, le deuxième mélange élastomérique ayant un module complexe de cisaillement dynamique G₂* à 50% de déformation et à 60°C, **dans lequel** le module complexe de cisaillement dynamique G₂* du deuxième mélange élastomérique est au moins égal à 1 MPa et, de préférence, au plus égal à 1.7 MPA.

5. Pneumatique (1) selon l'une quelconque des revendications 1 à 4, le deuxième mélange élastomérique ayant un facteur de perte tan (δ₂) à 60°C, **dans lequel** le facteur de perte tan (δ₂) du deuxième mélange élastomérique est au moins égal à 0.15 et au plus égal à 0.28.

## Patentansprüche

1. Reifen (1) für ein landwirtschaftliches Fahrzeug, umfassend:
- einen Laufstreifen (2), der dazu bestimmt ist, mit einem Boden in Kontakt zu treten, umfassend Stollen (3), die durch Furchen (4) voneinander getrennt sind,
- wobei sich jeder Stollen (3) radial nach außen über eine radiale Höhe H von einer Bodenfläche (5) bis zu einer Kontaktfläche (6) erstreckt,
- wobei die Furchen (4) von den Abschnitten der Bodenfläche (5) gebildet sind, welche die Stollen (3) trennen,
**dadurch gekennzeichnet, dass** sich in jedem Stollen (3) ein erster Stollenabschnitt (31), der von einer ersten Elastomermischung gebildet ist, von der Kontaktfläche (6) bis zu einer ersten Grenzfläche (7) über eine radiale Strecke D₁, die mindestens gleich dem 0,5-fachen und höchstens gleich dem 1-fachen der radialen Höhe H des Stollens ist, radial nach innen erstreckt, dadurch,
dass sich in jedem Stollen (3) ein zweiter Stollenabschnitt (32), der von einer zweiten Elastomermischung gebildet ist, von der ersten Grenzfläche (7) bis zu der Bodenfläche (5) über eine radiale Strecke D₂ radial nach innen erstreckt, dadurch, dass sich die zweite Elastomermischung von der Bodenfläche (5) bis zu einer zweiten Grenzfläche (8) über eine radiale Strecke D₃ radial innerhalb der Stollen (3) und der Furchen (4) erstreckt, und dadurch, dass die radiale Strecke D₃ zwischen der Bodenfläche (5) und der zweiten Grenzfläche (8) mindestens gleich 3 mm und höchstens gleich 15 mm ist.

2. Reifen (1) nach Anspruch 1, wobei die erste Elastomermischung einen komplexen dynamischen Schermodul G₁* bei 50 % Verformung und bei 60 °C aufweist, wobei der komplexe dynamische Schermodul G₁* der ersten Elastomermischung mindestens gleich 1,2 MPa und vorzugsweise höchstens gleich 2 MPa ist.

3. Reifen (1) nach einem der Ansprüche 1 oder 2, wobei die erste Elastomermischung einen Verlustfaktor Tan (δ₁) bei 60 °C aufweist, wobei der Verlustfaktor Tan (δ₁) der ersten Elastomermischung mindestens gleich 0,18 und höchstens gleich 0,32 ist.

4. Reifen (1) nach einem der Ansprüche 1 bis 3, wobei die zweite Elastomermischung einen komplexen dynamischen Schermodul G₂* bei 50 % Verformung und bei 60 °C aufweist, wobei der komplexe dynamische Schermodul G₂* der zweiten Elastomermischung mindestens gleich 1 MPa und vorzugsweise höchstens gleich 1,7 MPa ist.

5. Reifen (1) nach einem der Ansprüche 1 bis 4, wobei die zweite Elastomermischung einen Verlustfaktor Tan (δ₂) bei 60 °C aufweist, wobei der Verlustfaktor Tan (δ₂) der zweiten Elastomermischung mindestens gleich 0,15 und höchstens gleich 0,28 ist.

## Claims

1. Tyre (1) for a vehicle for agricultural use, comprising:
- a tread (2), intended to come into contact with the ground, comprising lugs (3) separated from one another by grooves (4),
- each lug (3) extending radially outwards, over a radial height H, from a bottom surface (5) as far as a contact face (6),
- the grooves (4) consisting of the portions of the bottom surface (5) separating the lugs (3),
**characterized in that,** in each lug (3), a first lug portion (31), made of a first elastomeric compound, extends radially inwards, from the contact face (6) as far as a first interface (7), over a radial distance D₁ at least equal to 0.5 times and at most equal to 1 times the radial height H of the lug, **in that,** in each lug (3), a second lug portion (32), made of a second elastomeric compound, extends radially inwards, from the first interface (7) as far as the bottom surface (5), over a radial distance D₂, **in that** the second elastomeric compound extends radially into the lugs (3) and the grooves (4), from the bottom surface (5) as far as a second interface (8), over a radial distance D₃, **and in that** the radial distance D₃ between the bottom surface (5) and the second interface (8) is at least equal to 3 mm and at most equal to 15 mm.

2. Tyre (1) according to Claim 1, the first elastomeric compound having a complex dynamic shear modulus G₁* at 50% deformation and at 60°C, **in which** the complex dynamic shear modulus G₁* of the first elastomeric compound is at least equal to 1.2 MPa and preferably at most equal to 2 MPa.

3. Tyre (1) according to either of Claims 1 and 2, the first elastomeric compound having a loss factor tan (δ₁) at 60°C, **in which** the loss factor tan (δ₁) of the first elastomeric compound is at least equal to 0.18 and at most equal to 0.32.

4. Tyre (1) according to any one of Claims 1 to 3, the second elastomeric compound having a complex dynamic shear modulus G₂* at 50% deformation and at 60°C, **in which** the complex dynamic shear modulus G₂* of the second elastomeric compound is at least equal to 1 MPa and preferably at most equal to 1.7 MPa.

5. Tyre (1) according to any one of Claims 1 to 4, the second elastomeric compound having a loss factor tan (δ₂) at 60°C, **in which** the loss factor tan (δ₂) of the second elastomeric compound is at least equal to 0.15 and at most equal to 0.28.
